# EUROPÄISCHE PATENTSCHRIFT

(11) **EP 3 272 207 B1**
(45) Veröffentlichungstag und Bekanntmachung des Hinweises auf die Patenterteilung: **02.10.2019**
(21) Anmeldenummer: 17001203.3
(22) Anmeldetag: 13.07.2017
(51) Int. Cl.: A01G 3/053

(54) **ARBEITSGERÄT MIT ÜBER EIN SCHWENKGELENK VERBUNDENEN TEILGEHÄUSEN**
WORKING DEVICE WITH PARTIAL HOUSINGS CONNECTED VIA A SWIVEL JOINT
APPAREIL DE TRAVAIL COMPRENANT DES BOÎTIERS PARTIELS RELIÉS PAR UNE ARTICULATION PIVOTANTE

(30) Priorität: 21.07.2016 DE 102016008935
(43) Veröffentlichungstag der Anmeldung: 24.01.2018
(73) Patentinhaber: Andreas Stihl AG & Co. KG, 71336 Waiblingen (DE)
(72) Erfinder: Barth, Benjamin, 71576 Burgstetten (DE); Hampe, David, 70376 Stuttgart (DE); Föhrenbach, Jan, 70734 Fellbach (DE); Wörner, Tobias, 71404 Korb (DE); Neumann, Ulrike, 70736 Fellbach (DE)
(74) Vertreter: Reinhardt, Annette

(56) Entgegenhaltungen:
- CH-A5- 629 885
- DE-A1- 19 753 361
- ES-B1- 2 306 608
- US-A1- 2004 237 317
- US-A1- 2013 248 216

## Beschreibung

Die Erfindung betrifft ein Arbeitsgerät mit über ein Schwenkgelenk verbundenen Teilgehäusen.

Es ist bekannt, bei Arbeitsgeräten ein Schwenkgelenk vorzusehen, über das die Lage von zwei Teilgehäusen des Arbeitsgeräts einstellbar ist. Dadurch wird insbesondere die Lage eines Werkzeugs des Arbeitsgeräts an den Einsatzfall angepasst.

Aus der DE 197 53 361 A1 ist ein Arbeitsgerät, nämlich ein Freischneidegerät mit einem Heckenscherenanbausatz bekannt. Der Getriebekopf des Heckenscherenanbausatzes umfasst eine in einem ersten Gehäuseteil gelagerte Antriebswelle und eine in einem zweiten Gehäuseteil gelagerte Abtriebswelle. Antriebswelle und Abtriebswelle sind über ein Mittelrad gekoppelt, das um eine senkrecht zur Antriebswelle und Abtriebswelle angeordnete Lagerwelle dreht. Um die Lage der beiden Gehäuseteile zueinander einzustellen, sind die beiden Gehäuseteile über eine lösbare Spanneinrichtung miteinander verbunden, die die beiden Gehäuseteile in Richtung der Lagerwelle miteinander verspannt. Die Spanneinrichtung umfasst eine Spannwelle, auf deren einem Ende eine Spannmutter aufgeschraubt ist, die sich am Gehäuse abstützt. Das andere Ende der Spannwelle ist an einem exzentrischen Spannkopf gelagert, an dem ein Spannhebel fixiert ist.

Die ES 2 306 608 B1 zeigt ein System von Paneelen, die in einem vertikalen Profil festgelegt sind. Zur Fixierung ist ein Bolzen mit konischer Öffnung vorgesehen, in den eine Madenschraube seitlich eingeschraubt ist.

Aus der CH 629 885 A5 ist ein Profil für ein Gestell bekannt, das hinterschnittene Längsnuten aufweist. In der Längsnut ist ein Ankerbolzen angeordnet, der über eine seitlich eingeschraubte Madenschraube in der Längsnut verspannt ist.

Bei der Verstellung bewegen sich die beiden Gehäuseteile um die Lagerwelle zueinander. Dadurch bewegen sich auch die Auflagepunkte der Spannmutter und des Spannhebels um die Lagerwelle. Bei einer Verstellung der beiden Gehäuseteile zueinander muss vermieden werden, dass sich die Spannmutter gegenüber der Spannwelle drehen und dadurch eine Lockerung der Spanneinrichtung bewirken kann.

Der Erfindung liegt die Aufgabe zugrunde, ein Arbeitsgerät der gattungsgemäßen Art zu schaffen, bei dem auf einfache Weise eine Verringerung der Spannkraft aufgrund der Verschwenkbewegung der beiden Gehäuseteile zueinander vermieden ist.

Diese Aufgabe wird durch ein Arbeitsgerät mit den Merkmalen des Anspruchs 1 gelöst.

Es ist vorgesehen, dass das Spannelement sich beim Spannen in Richtung einer Spannachse bewegt, die mit der Schwenkachse einen Winkel α von mehr als 10° einschließt. Dadurch, dass die Spannachse nicht in Richtung der Schwenkachse ausgerichtet ist, sondern zu dieser geneigt ist, ist bei einer Bewegung der beiden Teilgehäuse zueinander um die Schwenkachse ein Verdrehen des Spannelements gegenüber den Teilgehäusen auf einfache Weise vermieden. Eine aufwendige Sicherung der Lage des Spannelements gegenüber einem Spannbolzen oder dergleichen ist nicht notwendig. Die Lagesicherung wird bereits durch die Anordnung der Spannachse zur Schwenkachse in einem Winkel von mehr als 10° erreicht.

Vorteilhaft beträgt der Winkel mehr als 45°, insbesondere etwa 90°. Der Winkel beträgt dabei maximal 90°. Eine einfache Gestaltung ergibt sich, wenn die Spanneinrichtung eine Gewindeverbindung umfasst. Die Spannachse ist dabei vorteilhaft die Mittelachse der Gewindeverbindung. Ist die Spannachse zur Schwenkachse versetzt angeordnet, so verläuft die Spannachse parallel zur Mittelachse der Gewindeverbindung und schneidet die Schwenkachse. Bevorzugt wirkt die Gewindeverbindung zwischen dem Spannelement und dem Getriebegehäuse. Bei der DE 197 53 361 A1 wirkt die Gewindeverbindung zwischen dem Spannbolzen und der Spannmutter. Bei der vorliegenden Erfindung ist dagegen eine Gewindeverbindung zwischen dem Spannelement und dem Getriebegehäuse vorgesehen.

Ein kompakter Aufbau wird erreicht, wenn die Schwenkachse ein Bauteil der Getriebeeinheit schneidet. Besonders bevorzugt schneidet die Schwenkachse ein Lager des Abtriebsteils. Dadurch, dass mindestens ein Bauteil der Getriebeeinheit, insbesondere ein Lager des Abtriebsteils im Bereich der Schwenkachse angeordnet wird, wird ein kompakter Aufbau erreicht. Die Schwenkachse ragt dabei nicht lediglich durch eine Öffnung des Mittelrads, während Antriebsrad und Abtriebsrad bereits vor der Schwenkachse enden, wie im Stand der Technik, sondern verläuft über mindestens einen Längenabschnitt im Material eines Bauteils der Getriebeeinheit.

Vorteilhaft weist das Schwenkgelenk einen Spannbolzen auf, auf den das Spannelement wirkt. Der Spannbolzen besitzt vorteilhaft einen Spannabschnitt, mit dem das Spannelement zur Einstellung der Spannkraft zusammenwirkt. Der Spannabschnitt des Spannbolzens schließt mit der Schwenkachse vorteilhaft einen Winkel von mehr als 20° ein. Besonders bevorzugt schließt der Spannabschnitt des Spannbolzens mit der Schwenkachse einen Winkel von mehr als 30°, insbesondere von mehr als 40° ein. Durch die Schrägstellung des Spannabschnitts gegenüber der Schwenkachse kann die Bewegung des Spannelements in Richtung der Spannachse auf einfache Weise in eine Bewegung des Spannbolzens in Richtung der schräg hierzu verlaufenden Schwenkachse umgewandelt werden. Der Spannabschnitt ermöglicht einen einfachen Aufbau. Besonders bevorzugt weist der Spannbolzen eine kegelförmige Vertiefung auf, an der der Spannabschnitt ausgebildet ist. Über die kegelförmige Vertiefung wird gleichzeitig eine Sicherung der Drehlage des Spannbolzens gegenüber dem Spannelement erreicht. Es kann jedoch auch vorgesehen sein, dass der Spannbolzen einen rampenförmigen Abschnitt besitzt, der den Spannabschnitt bildet. Auch eine andere Gestaltung des Spannabschnitts kann vorteilhaft sein.

Vorteilhaft durchragt der Spannbolzen eines der Teilgehäuse und weist ein freies Ende auf, das innerhalb des anderen Teilgehäuses liegt. Dadurch, dass der Spannbolzen innerhalb eines der Teilgehäuse endet, kann der Spannbolzen vergleichsweise kurz ausgebildet werden. Vorteilhaft schneidet eine gedachte Verlängerung des Spannbolzens in das andere Teilgehäuse ein Bauteil der Getriebeeinheit, insbesondere ein Lager des Abtriebsteils. Dadurch wird ein kompakter Aufbau erreicht. Der Spannabschnitt ist bevorzugt benachbart zum freien Ende des Spannbolzens angeordnet.

Vorteilhaft weist die Spanneinrichtung mindestens eine Feder auf, die zwischen dem Spannbolzen und einem Teilgehäuse wirkt. Über die Feder können die beiden Teilgehäuse in Richtung der Schwenkachse verspannt werden. Zwischen der mindestens einen Feder und einer Anlagefläche des Teilgehäuses ist vorteilhaft eine Scheibe angeordnet. Die Scheibe ist insbesondere gegenüber dem Teilgehäuse verdrehgesichert. Insbesondere bei Teilgehäusen, die aus gegenüber Reibung empfindlichen Materialien wie beispielsweise Magnesium bestehen, kann durch die gegenüber dem Teilgehäuse verdrehgesicherte Scheibe sichergestellt werden, dass beim Verdrehen der beiden Teilgehäuse zueinander keine Relativdrehung gegenüber einer Anlagefläche des Teilgehäuses stattfindet. Vielmehr dreht sich der Spannbolzen gegenüber der Scheibe. Die mindestens eine Feder kann sich dabei mit dem Spannbolzen drehen oder an der Scheibe anliegen. Dies ist abhängig von den herrschenden Reibungsverhältnissen. Auch eine Verdrehsicherung der Feder gegenüber dem Spannbolzen oder dem Gehäuse bzw. der Scheibe kann jedoch vorteilhaft sein. Dadurch ist konstruktiv festgelegt, zwischen welchen Bauteilen die Relativdrehung erfolgt. Eine einfache konstruktive Gestaltung ergibt sich, wenn die Scheibe gegenüber dem Teilgehäuse durch Formschluss verdrehgesichert ist.

Das Arbeitsgerät besitzt vorteilhaft einen Schaft, der ein Motorgehäuse mit dem Getriebegehäuse verbindet. Das erste Teilgehäuse ist vorteilhaft fest mit dem Schaft verbunden. Das Arbeitsgerät ist bevorzugt ein Heckenschneider. Am zweiten Teilgehäuse ist insbesondere eine Messeranordnung festgelegt, die mindestens einen hin- und hergehend angetriebenen Messerbalken umfasst. Insbesondere für Heckenschneider ist eine Ausrichtung der Messeranordnung über ein Schwenkgelenk zwischen zwei Teilgehäusen des Getriebegehäuses vorteilhaft.

Ein Ausführungsbeispiel der Erfindung wird im Folgenden anhand der Zeichnung erläutert. Es zeigen:
- Fig. 1: eine schematische Darstellung eines Heckenschneiders,
- Fig. 2: eine perspektivische Darstellung eines Abschnitts des Getriebegehäuses des Hackenschneiders aus Fig. 1,
- Fig. 3: eine Explosionsdarstellung des Getriebegehäuses,
- Fig. 4: eine schematische Darstellung der Getriebeeinheit,
- Fig. 5: einen Schnitt durch das Getriebegehäuse,
- Fig. 6: eine vergrößerte Darstellung des Bereichs eines Spannelements aus Fig. 6,
- Fig. 7: eine vergrößerte Darstellung des Bereichs einer Aufnahme für den Spannbolzen in Fig. 3.

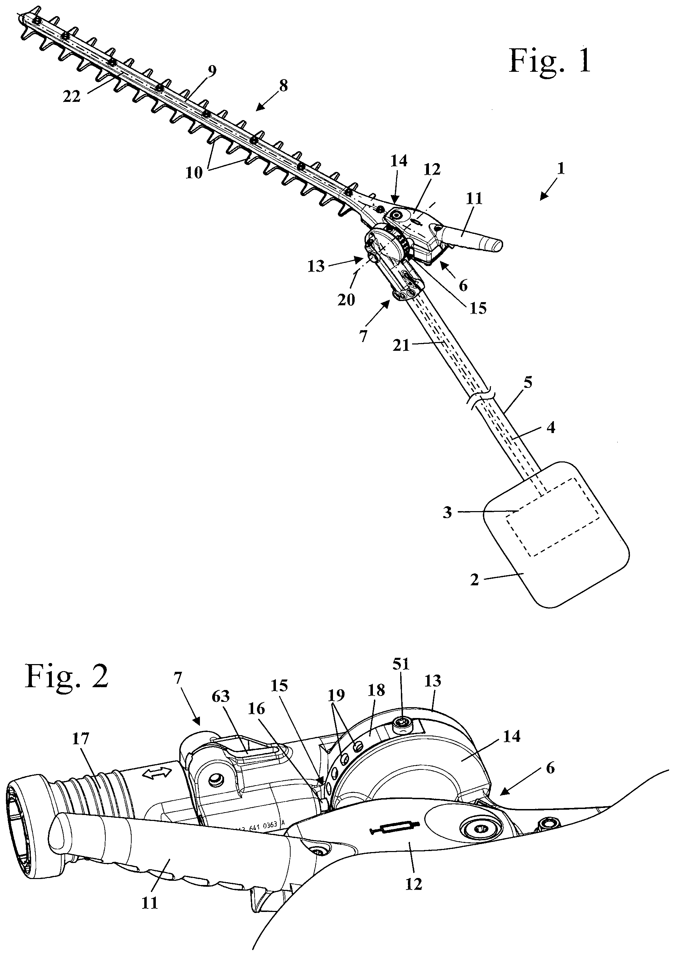

Fig. 1 zeigt als Ausführungsbeispiel für ein Arbeitsgerät einen Heckenschneider 1. Der Heckenschneider 1 ist ein handgeführtes Arbeitsgerät und dazu vorgesehen, Hecken oder dgl., insbesondere vergleichsweise hohe oder schlecht zugängliche Hecken, zu schneiden. Hierzu besitzt der Heckenschneiderl ein Motorgehäuse 2, das vom Bediener getragen wird und das über einen Schaft 5 mit einem Getriebegehäuse 6 verbunden ist. Am Getriebegehäuse 6 ist eine Messeranordnung 8 zum Schneiden der Hecke angeordnet, die im Ausführungsbeispiel zwei an einer Führung 9 gelagerte Messerbalken 10 umfasst. Die Messerbalken 10 besitzen eine Längsachse 22, in deren Richtung sie hin- und hergehend angetrieben werden.

Um die Ausrichtung der Messerbalken 10 an den jeweiligen Anwendungsfall angepasst einstellen zu können, besitzt das Getriebegehäuse 6 ein erstes, am Schaft 5 festgelegtes Teilgehäuse 13 sowie ein zweites Teilgehäuse 14, an dem die Messerbalken 10 angeordnet sind. Die beiden Teilgehäuse 13 und 14 sind gegeneinander um eine Schwenkachse 20 verschwenkbar. Zur Einstellung der Schwenklage ist eine Verstelleinrichtung 15 vorgesehen. Am zweiten Teilgehäuse 14 ist ein Griffteil 12 angeordnet, das einen Verstellgriff 11 umfasst, über den die Schwenklage der Messeranordnung 8 gegenüber dem Schaft 5 vom Bediener bequem eingestellt werden kann. Zum Antrieb der Messeranordnung 8 ist ein Antriebsmotor 3 vorgesehen, der im Motorgehäuse 2 angeordnet ist. Der Antriebsmotor 3 ist bevorzugt ein Verbrennungsmotor, insbesondere ein Zweizylindermotor, bevorzugt ein Zweitaktmotor oder ein gemischgeschmierter Viertaktmotor. Der Antriebsmotor 3 kann jedoch auch ein Elektromotor sein, der kabelgebunden oder über einen Akku mit Energie versorgt sein kann. Der Antriebsmotor 3 treibt eine Antriebswelle 4 rotierend an, die im Schaft 5 gelagert ist. Die Antriebswelle 4 rotiert um eine Längsachse 21 des Schafts 5.

Das erste Teilgehäuse 13 ist am Schaft 5 über eine Fixiereinrichtung 7 fixiert. Die Fixiereinrichtung 7 ist in Fig. 2 gezeigt. An der Fixiereinrichtung 7 besitzt das erste Teilgehäuse 13 einen Längsschlitz 63, der in Längsrichtung des Schafts 5 verläuft. Die beiden durch den Längsschlitz 63 voneinander getrennten Abschnitte des ersten Teilgehäuses 13 können über Klemmschrauben oder dergleichen aufeinander zu gezogen und dadurch das Teilgehäuse 13 am Schaft 5 festgeklemmt werden.

Fig. 2 zeigt auch die Verstelleinrichtung 15 im Einzelnen. Die Verstelleinrichtung 15 umfasst eine Verstellhülse 17, die den Schaft 5 (Fig. 1) umgreift. In Fig. 1 ist die Verstellhülse 17 nicht gezeigt. Die Verstellhülse 17 ist gegenüber dem Schaft 5 in Richtung der Längsachse 21 verstellbar. An der Verstellhülse 17 ist ein Zapfen 16 fixiert, der in ein am zweiten Teilgehäuse 14 angeordnetes Lochblech 18 eingreift. Das Lochblech 18 besitzt eine Vielzahl von über den Umfang des zweiten Teilgehäuses 14 verteilt angeordneten Öffnungen 19, in die der Zapfen 16 eingreifen kann. Jede Öffnung 19 ist einer Schwenklage des zweiten Teilgehäuses 14 gegenüber dem ersten Teilgehäuse 13 zugeordnet. Das Lochblech 18 ist über Befestigungsschrauben 51 am zweiten Teilgehäuse 14 fixiert. Auch eine andere konstruktive Gestaltung der Öffnungen 19 kann vorteilhaft sein.

Zur Einstellung der Schwenklage der Messeranordnung 8 gegenüber dem Schaft 5 zieht der Bediener die Verstellhülse 17 in Richtung auf das Motorgehäuse 2. Dadurch gelangt der Zapfen 16 aus der Öffnung 19 und das zweite Teilgehäuse 14 ist gegenüber dem ersten Teilgehäuse 13 verschwenkbar. Zur Verschwenkung kann der Bediener das zweite Teilgehäuse 14 am Verstellgriff 11 greifen und um die Schwenkachse 20 (Fig. 1) verschwenken, bis die gewünschte Ausrichtung erreicht wird. Anschließend wird die Verstellhülse 17 in Richtung auf das erste Teilgehäuse 13 verschoben, so dass der Zapfen 16 in eine Öffnung 19 gelangt und dadurch die Ausrichtung der Teilgehäuse 13 und 14 zueinander fixiert. Bevorzugt ist die Verstellhülse 17 in Richtung auf das erste Teilgehäuse 13 gefedert gelagert, so dass der Bediener die Verstellhülse 17 nach der Einstellung einer gewünschten Ausrichtung der Teilgehäuse 13 und 14 zueinander lediglich loslassen muss. Anschließend werden die beiden Teilgehäuse 13 und 14 gegeneinander verspannt.

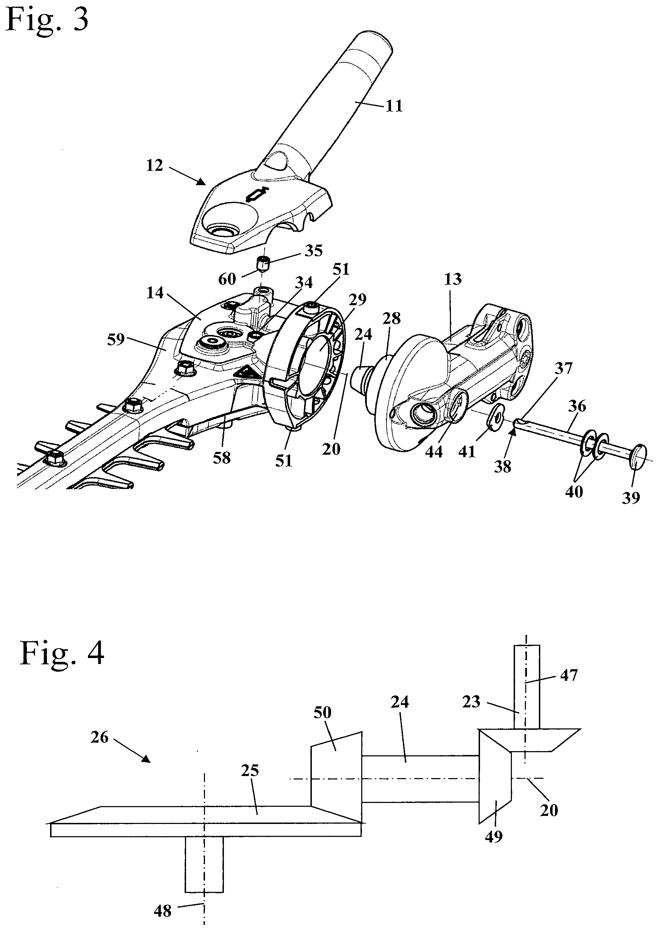

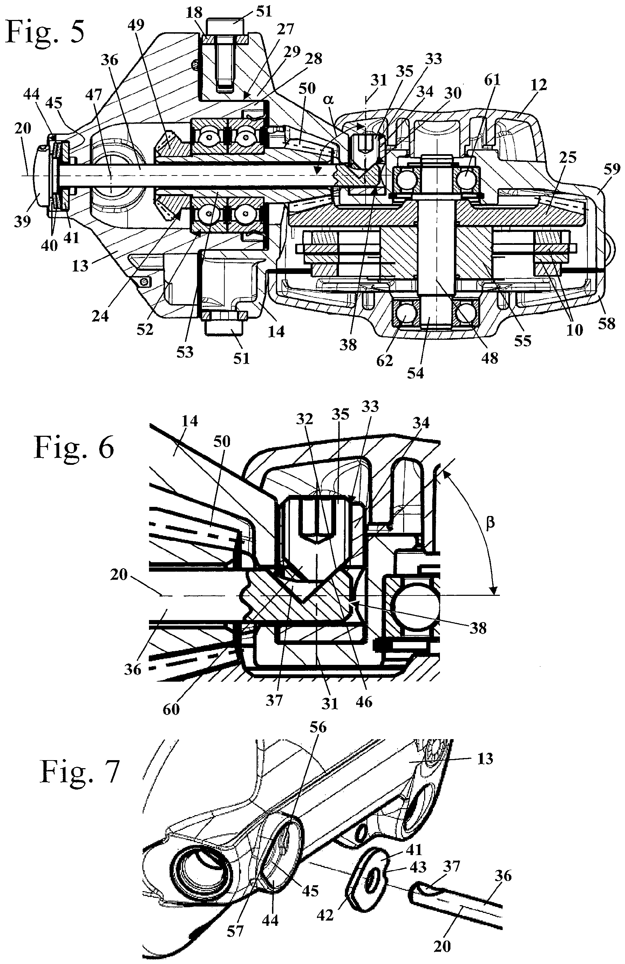

Wie Fig. 3 zeigt, besitzt das erste Teilgehäuse 13 an der dem zweiten Teilgehäuse 14 zugewandten Seite einen Lagerzapfen 28, der zum Eingriff in eine Lagerbuchse 29 des zweiten Teilgehäuses 14 vorgesehen ist. Der Lagerzapfen 28 und die Lagerbuchse 29 bilden ein Schwenkgelenk 27 (Fig. 5) zur Verschwenkung der beiden Teilgehäuse 13, 14 gegeneinander. Zur Verspannung der beiden Teilgehäuse 13 und 14 gegeneinander ist ein Spannbolzen 36 vorgesehen, der durch das erste Teilgehäuse 13 in das zweite Teilgehäuse 14 ragt. Durch die Verspannung der beiden Teilgehäuse 13 und 14 gegeneinander wird die eingestellte Schwenklage gesichert. Der Spannbolzen 36 besitzt einen Kopf 39, der sich gegenüber dem ersten Teilgehäuse 13 in Richtung der Schwenkachse 20 abstützt. Die Schwenkachse 20 ist gleichzeitig die Längsmittelachse des Spannbolzens 36. Der Spannbolzen 36 stützt sich gegenüber dem ersten Teilgehäuse 13 über eine Scheibe 41 sowie zwei Federn 40 ab. Im Ausführungsbeispiel sind die Federn 40 als Tellerfedern ausgebildet. Auch eine andere Anzahl und/ oder eine andere Gestaltung der Federn 40 kann vorteilhaft sein.

Der Spannbolzen 36 ragt durch die Federn 40 und die Scheibe 41. Die Scheibe 41 und die Federn 40 sind in einer Aufnahme 44 des ersten Teilgehäuses 13 angeordnet. Wie Fig. 3 auch zeigt, besitzt der Spannbolzen 36 benachbart zu einem freien Ende 38 eine Vertiefung 37, die im Ausführungsbeispiel kegelförmig ausgebildet ist. Die Vertiefung 37 erstreckt sich vom Außenumfang des Spannbolzens 36 in Richtung auf die Schwenkachse 20. Die Mittelachse der kegelförmigen Vertiefung 37 verläuft im Ausführungsbeispiel senkrecht zur Schwenkachse 20. Im Ausführungsbeispiel schneidet die Schwenkachse 20 die kegelförmige Vertiefung 37, wie Fig. 5 zeigt. Im zweiten Teilgehäuse 14 ist einen Gewindebuchse 34 eingepresst, die sich senkrecht zur Schwenkachse 20 erstreckt. In die Gewindebuchse 34 ist eine Schraube, im Ausführungsbeispiel eine Madenschraube 35, eingeschraubt. Die Madenschraube 35 besitzt eine kegelförmige Spitze 60, die in montiertem Zustand der Anordnung in die kegelförmige Vertiefung 37 des Spannbolzens 36 ragt. Im montierten Zustand der Anordnung wird die Madenschraube 35 von dem Griffteil 12 abgedeckt.

Wie Fig. 3 auch zeigt, besitzt das zweite Teilgehäuse 14 eine obere Gehäuseschale 59, in der die Lagerbuchse 29 und die Gewindebuchse 34 angeordnet sind sowie eine untere Gehäuseschale 58, die das zweite Gehäuseteil 14 verschließt. In Fig. 3 ist auch ein Mittelrad 24 erkennbar, das Teil der in Fig. 4 gezeigten Getriebeeinheit 26 ist.

Die Getriebeeinheit 26 ist in Fig. 4 lediglich schematisch gezeigt. Die Getriebeeinheit 26 besitzt ein Antriebsrad 23, dessen Antriebsachse 47 in Richtung der Längsachse 21 des Schafts 5 (Fig. 1) ausgerichtet ist. Die Antriebsachse 47 fällt vorteilhaft mit der Längsachse 21 zusammen. Das Antriebsrad 23 kämmt mit einem Eingangsrad 49 des Mittelrads 24. Das Mittelrad 24 dreht um die Drehachse 20. Das Mittelrad 24 besitzt ein Ausgangsrad 50, das mit einem Abtriebsrad 25 kämmt. Das Abtriebsrad 25 dreht um eine Abtriebsachse 48. Die Abtriebsachse 48 ist senkrecht zur Längsachse 22 der Messeranordnung 8 ausgerichtet. Die Abtriebsachse 48 steht vorteilhaft senkrecht auf die Ebene der Messerbalken 10 (Fig. 1). Bei einer Drehung des zweiten Gehäuseteils 14 gegenüber dem ersten Gehäuseteil 13 schwenken die Achsen 47 und 48 relativ zueinander um die Schwenkachse 20.

Fig. 5 zeigt einen Schnitt durch das Getriebegehäuse 6 in einer Lage, in der Antriebsachse 47 (Fig. 4) und Abtriebsachse 48 (Fig. 4 und 5) senkrecht zueinander angeordnet sind. In Fig. 5 ist die Antriebsachse 47 demnach senkrecht zur Blattebene angeordnet. Wie Fig. 5 zeigt, sind das Eingangsrad 49 und das Ausgangsrad 50 des Mittelrads 24 als separate Bauteile ausgebildet. Das Ausgangsrad 50 ist einteilig mit einer Lagerwelle 53 ausgebildet, auf der das Eingangsrad 49 fixiert ist. Die Lagerwelle 53 ist mit einem Lager 52, das im Ausführungsbeispiel als Wälzlager ausgeführt ist, im ersten Teilgehäuse 13 drehbar gelagert. Das Lager 52 wird im Ausführungsbeispiel durch zwei Kugellager gebildet. Die Lagerwelle 53 ist als Hohlwelle ausgebildet. Der Spannbolzen 36 ragt vollständig durch das Mittelrad 24. Das Ausgangsrad 50 des Mittelrads 24 kämmt mit dem Abtriebsrad 25, das an einer Lagerwelle 54 drehbar um die Abtriebsachse 48 gelagert ist. Die Lagerwelle 54 ist mit einem Lager 61, im Ausführungsbeispiel einem Wälzlager, nämlich einem Kugellager, in der oberen Gehäuseschale 59 des zweiten Teilgehäuses 14 gelagert und mit einem Lager 62, das im Ausführungsbeispiel ebenfalls als Wälzlager, nämlich als Kugellager ausgebildet ist, in der unteren Gehäuseschale 58 gelagert. Zwischen dem Abtriebsrad 25 und dem Lager 62 ist ein Exzenter 55 angeordnet, der die Messerbalken 10 in üblicher Weise hin- und hergehend antreibt.

Wie Fig. 5 zeigt, endet das freie Ende 38 des Spannbolzens 36 vor dem Lager 61. Die Schwenkachse 20 und eine gedachte Verlängerung des Spannbolzens 36 schneiden das Lager 61.

In Fig. 5 ist auch die Anordnung der Federn 40 und der Scheibe 41 in der Aufnahme 44 gezeigt. Wie Fig. 5 zeigt, besitzt die Aufnahme 44 eine Anlagefläche 45, die den Boden der Aufnahme 44 bildet und an der die Scheibe 41 anliegt. Der Kopf 39 des Spannbolzens 36 liegt an einer Feder 40 an. Im Ausführungsbeispiel ist der Kopf 39 außerhalb der Aufnahme 44 angeordnet. Auch eine Anordnung innerhalb der Aufnahme 44 kann jedoch vorteilhaft sein.

Zur Fixierung der beiden Teilgehäuse 13 und 14 gegeneinander ist eine Spann-, einrichtung 30 vorgesehen. Die Spanneinrichtung 30 umfasst den Spannbolzen 36 mit den Federn 44 und der Scheibe 41 sowie die Madenschraube 35. Die Madenschraube 35 ist über eine Gewindeverbindung 33 im zweiten Gehäuseteil 14 gehalten. Die Gewindeverbindung 33 ist zwischen der fest im zweiten Teilgehäuse fixierten Gewindebuchse 34 und dem Außengewinde der Madenschraube 35 gebildet. Wird die Madenschraube 35 in das zweite Teilgehäuse 14 eingeschraubt, so bewegt sie sich in Richtung einer Spannachse 31 in das zweite Teilgehäuse 14. Die Spannachse 31 ist die Mittelachse der Gewindeverbindung 33. Die Spannachse 31 schließt mit der Schwenkachse 20 einen Winkel α ein. Der Winkel α beträgt mehr als 10°, vorzugsweise mehr als 45°. Bevorzugt beträgt der Winkel α etwa 90°. Im Ausführungsbeispiel ist ein Winkel α von 90° vorgesehen. Der Winkel α ist dabei so gemessen, dass er nicht mehr als 90° beträgt.

Wie Fig. 6 zeigt, liegt die Spitze 60 der Madenschraube 35 in der kegelförmigen Vertiefung 37. Dabei liegt die Madenschraube 35 mit einer an der Spitze 60 ausgebildeten Kontaktfläche 32 an einem Spannabschnitt 46 der kegelförmigen Vertiefung 37 an. Der Spannabschnitt 46 ist die dem freien Ende 38 zugewandte, dem Kopf 39 abgewandte Flanke der Vertiefung 37. Im Ausführungsbeispiel verlaufen die Kontaktfläche 32 und der Spannabschnitt 46 parallel zueinander. Die Kontaktfläche 32 ist dabei nur der Bereich der Madenschraube 35, der tatsächlich mit dem Spannbolzen 36 in Verbindung steht. Der Spannabschnitt 46 ist nur der Bereich der Vertiefung 37, an dem die Madenschraube 35 mit ihrer Kontaktfläche 32 anliegt. Der Spannabschnitt 46 schließt mit der Schwenkachse 20 einen Winkel β ein, der mehr als 20°, insbesondere mehr als 30° und bevorzugt mehr als 40° beträgt. Im Ausführungsbeispiel ist ein Winkel β von etwa 45° vorgesehen. Wird die Madenschraube 35 in Spannrichtung 31 in das Teilgehäuse 14 und damit in den Spannbolzen 36 eingeschraubt, so wird dadurch eine Kraft auf den Spannbolzen 36 in das Teilgehäuse 14 hinein, also in Fig. 6 nach rechts ausgeübt. Dadurch wird der Kopf 39 gegen die Federn 40 gedrückt (Fig. 5), wodurch die Federn 40 vorgespannt werden. Über die Einschraubtiefe der Madenschraube 35 kann dadurch die Vorspannung zwischen den beiden Teilgehäusen 13 und 14 eingestellt werden. Da die Spannrichtung 31 winklig zur Schwenkachse 20 liegt, wird die Madenschraube 35 durch das Verschwenken der beiden Teilgehäuse 13 und 14 zueinander nicht gegenüber dem Spannbolzen 36 gedreht, so dass ein unbeabsichtigtes Lockern der Vorspannung der beiden Teilgehäuse 13 und 14 zueinander vermieden ist.

Beim Verdrehen der beiden Teilgehäuse 13 und 14 zueinander verdreht sich der Spannbolzen 36 gegenüber dem ersten Gehäuseteil 13, da die Ausrichtung des Spannbolzens 36 gegenüber dem zweiten Gehäuseteil 14 über die Madenschraube 35 und die kegelförmige Vertiefung 37 festgelegt ist (Fig. 5 und 6). Um zu vermeiden, dass eine Relativbewegung am ersten Teilgehäuse 13 stattfindet, ist die Scheibe gegenüber dem ersten Gehäuseteil 13 in ihrer Drehlage gesichert, wie Fig. 7 zeigt. Im Ausführungsbeispiel ist eine formschlüssige Sicherung vorgesehen. Die Scheibe 41 besitzt eine Sicherungsabschnitt 42, der als Nase ausgebildet ist und an dem der Radius der Scheibe 41 vergrößert ist. An der gegenüberliegenden Seite besitzt die Scheibe 41 einen Sicherungsabschnitt 43, der als Vertiefung am Außenumfang der Scheibe 41 vorgesehen ist. Wie Fig. 7 zeigt, ist die Umfangswand der Aufnahme 44 mit einer Ausbuchtung 57 versehen. An der gegenüberliegenden Seite der Aufnahme 44 ist eine Erhöhung 56 angeordnet. Im montierten Zustand ragt der Sicherungsabschnitt 42 in die Ausbuchtung 57 und die Erhöhung 56 ragt in den Sicherungsabschnitt 43. Dadurch ist die Scheibe 41 formschlüssig am Teilgehäuse 13 gesichert und kann sich nicht mit dem Spannbolzen 36 um die Schwenkachse 20 drehen. Dadurch wird Verschleiß aufgrund von Reibung an der Aufnahme 44 des Teilgehäuses 13 auf einfache Weise vermieden.

Anstatt der Gewindeverbindung kann auch eine andere Fixierung des Spannbolzens 36, beispielsweise über ein in das zweite Teilgehäuse eingepresstes Spannelement oder dgl. vorteilhaft sein. Es kann auch vorteilhaft sein, dass sich der Kopf 39 des Spannbolzens 36 am zweiten Teilgehäuse 14 abstützt und das freie Ende 38 des Spannbolzens 36 in das erste Teilgehäuse 13 ragt. Auch eine andere Anordnung der Federn 40 kann zweckmäßig sein. Es kann auch vorgesehen sein, eine oder beide der Federn 40 mit einer Verdrehsicherung zu versehen, so dass die eine oder beide Federn 40 formschlüssig am Teil-gehäuse 13 gesichert ist. Die Scheibe 41 kann bei dieser Gestaltung entfallen.

## Patentansprüche

1. Arbeitsgerät mit einer Getriebeeinheit (26) und mit einem Getriebegehäuse (6), wobei die Getriebeeinheit (26) in dem Getriebegehäuse (6) angeordnet ist, wobei die Getriebeeinheit (26) ein in einem ersten Teilgehäuse (13) des Getriebegehäuses (6) angeordnetes Antriebsteil und ein in einem zweiten Teilgehäuse (14) angeordnetes Abtriebsteil umfasst, wobei die beiden Teilgehäuse (13, 14) über ein Schwenkgelenk (27) miteinander verbunden sind, das eine Verschwenkung des zweiten Teilgehäuses (14) gegenüber dem ersten Teilgehäuse (13) um eine Schwenkachse (20) erlaubt, wobei das Schwenkgelenk (27) eine Spanneinrichtung (30) zum Verspannen der beiden Teilgehäuse (13, 14) in Richtung der Schwenkachse (20) aufweist, wobei die mit der Spanneinrichtung (30) auf die beiden Teilgehäuse (13, 14) ausgeübte Kraft über ein Spannelement einstellbar ist,
**dadurch gekennzeichnet, dass** das Spannelement sich beim Spannen in Richtung einer Spannachse (31) bewegt, wobei die Spannachse (31) mit der Schwenkachse (20) einen Winkel (α) einschließt, der mehr als 10° beträgt.

2. Arbeitsgerät nach Anspruch 1,
**dadurch gekennzeichnet, dass** der Winkel (α) mehr als 45° beträgt.

3. Arbeitsgerät nach Anspruch 1 oder 2,
**dadurch gekennzeichnet, dass** die Spanneinrichtung (30) eine Gewindeverbindung (33) umfasst, und dass die Spannachse (31) die Mittelachse der Gewindeverbindung (33) ist.

4. Arbeitsgerät nach Anspruch 3,
**dadurch gekennzeichnet, dass** die Gewindeverbindung (33) zwischen dem Spannelement und dem Getriebegehäuse (6) wirkt.

5. Arbeitsgerät nach einem der Ansprüche 1 bis 4,
**dadurch gekennzeichnet, dass** die Schwenkachse (20) ein Bauteil der Getriebeeinheit (26) schneidet.

6. Arbeitsgerät nach einem der Ansprüche 1 bis 5,
**dadurch gekennzeichnet, dass** das Schwenkgelenk (27) einen Spannbolzen (36) aufweist, auf den das Spannelement wirkt.

7. Arbeitsgerät nach Anspruch 6,
**dadurch gekennzeichnet, dass** der Spannbolzen (36) einen Spannabschnitt (46) aufweist, mit dem das Spannelement zur Einstellung der Spannkraft zusammenwirkt, wobei der Spannabschnitt (46) des Spannbolzens (36) mit der Schwenkachse (20) einen Winkel (β) von mehr als 20° einschließt.

8. Arbeitsgerät nach Anspruch 7,
**dadurch gekennzeichnet, dass** der Spannbolzen (36) eine kegelförmige Vertiefung (37) aufweist, an der der Spannabschnitt (46) ausgebildet ist.

9. Arbeitsgerät nach einem der Ansprüche 6 bis 8,
**dadurch gekennzeichnet, dass** der Spannbolzen (36) eines der Teilgehäuse (13) durchragt, und dass der Spannbolzen (36) ein freies Ende (38) aufweist, das innerhalb des anderen Teilgehäuses (14) liegt.

10. Arbeitsgerät nach Anspruch 9,
**dadurch gekennzeichnet, dass** der Spannabschnitt benachbart zu dem freien Ende (38) des Spannbolzens (36) angeordnet ist.

11. Arbeitsgerät nach einem der Ansprüche 6 bis 10,
**dadurch gekennzeichnet, dass** die Spanneinrichtung (30) mindestens eine Feder (40) aufweist, die zwischen dem Spannbolzen (36) und einem Teilgehäuse (13) wirkt.

12. Arbeitsgerät nach Anspruch 11,
**dadurch gekennzeichnet, dass** zwischen der mindestens einen Feder (40) und einer Anlagefläche (44) des Teilgehäuses (13) eine Scheibe (41) angeordnet ist, und dass die Scheibe (41) gegenüber dem Teilgehäuse (13) verdrehgesichert ist, insbesondere durch Formschluss.

13. Arbeitsgerät nach einem der Ansprüche 1 bis 12,
**dadurch gekennzeichnet, dass** das Arbeitsgerät einen Schaft (5) besitzt, der ein Motorgehäuse (2) mit dem Getriebegehäuse (6) verbindet, wobei das erste Teilgehäuse (13) fest mit dem Schaft (5) verbunden ist.

14. Arbeitsgerät nach einem der Ansprüche 1 bis 13,
**dadurch gekennzeichnet, dass** das Arbeitsgerät ein Heckenschneider (1) ist, und dass am zweiten Teilgehäuse (14) eine Messeranordnung (8) festgelegt ist, die mindestens einen hin- und hergehend angetriebenen Messerbalken (10) umfasst.

## Claims

1. Working implement with a gear unit (26) and a gear housing (6), wherein the gear unit (26) is located in the gear housing (6), wherein the gear unit (26) comprises a drive part located in a first part-housing (13) of the gear housing (6) and a driven part located in a second part-housing (14), wherein the two part-housings (13, 14) are joined via a swivel joint (27), which allows a pivoting of the second part-housing (14) relative to the first part-housing (13) about a pivot axis (20), wherein the swivel joint (27) has a clamping device (30) for clamping the two part-housings (13, 14) in the direction of the pivot axis (20), wherein the force applied by the clamping device (30) to the two part-housings (13, 14) is adjustable, **characterised in that** the clamping element moves in the direction of a clamping axis (31) in the clamping process, wherein the clamping axis (31) encloses with the pivot axis (20) an angle (α) of more than 10°.

2. Working implement according to claim 1,
**characterised in that** the angle (α) is more than 45°.

3. Working implement according to claim 1 or 2,
**characterised in that** the clamping device (30) comprises a threaded connection (33), and **in that** the clamping axis (31) is the central axis of the threaded connection (33).

4. Working implement according to claim 3,
**characterised in that** the threaded connection (33) acts between the clamping element and the gear housing (6).

5. Working implement according to any of claims 1 to 4,
**characterised in that** the pivot axis (20) intersects a component of the gear unit (26).

6. Working implement according to any of claims 1 to 5,
**characterised in that** the swivel joint (27) has a clamping pin (36), on which the clamping element acts.

7. Working implement according to claim 6,
**characterised in that** the clamping pin (36) has a clamping section (46), with which the clamping element interacts for adjusting the clamping force, wherein the clamping section (46) of the clamping pin (36) encloses with the pivot axis (20) an angle (β) of more than 20°.

8. Working implement according to claim 7,
**characterised in that** the clamping pin (36) has a conical recess (37), at which the clamping section (46) is formed.

9. Working implement according to any of claims 6 to 8,
**characterised in that** the clamping pin (36) extends through one of the part-housings (13), and **in that** the clamping pin (36) has a free end (38) lying within the other part-housing (14).

10. Working implement according to claim 9,
**characterised in that** the clamping section is located adjacent to the free end (38) of the clamping pin (36).

11. Working implement according to any of claims 6 to 10,
**characterised in that** the clamping device (30) has at least one spring (40) acting between the clamping pin (36) and a part-housing (13).

12. Working implement according to claim 11,
**characterised in that** a disc (41) is located between the at least one spring (40) and a contact surface (44) of the part-housing (13), and **in that** the disc (41) is secured against rotation relative to the part-housing (13), in particular by positive locking.

13. Working implement according to any of claims 1 to 12,
**characterised in that** the working implement has a shaft (5), which connects a motor housing (2) to the gear housing (6), wherein the first part-housing (13) is permanently connected to the shaft (5).

14. Working implement according to any of claims 1 to 13,
**characterised in that** the working implement is a hedge trimmer (1), and **in that** a cutter assembly (8) comprising at least one cutter bar (10) driven to perform a reciprocating movement is fixed to the second part-housing (14).

## Revendications

1. Appareil de travail avec une unité de transmission (26) et avec un boîtier de transmission (6), dans lequel l'unité de transmission (26) est disposée dans le boîtier de transmission (6), dans lequel l'unité de transmission (26) comprend un élément d'entraînement disposé dans un premier boîtier partiel (13) du boîtier de transmission (6), et un élément de sortie disposé dans un deuxième boîtier partiel (14), dans lequel les deux boîtiers partiels (13, 14) sont reliés entre eux par une articulation pivotante (27) qui permet un pivotement du deuxième boîtier partiel (14) par rapport au premier boîtier partiel (13) autour d'un axe de pivotement (20), dans lequel l'articulation pivotante (27) comporte un dispositif de serrage (30) pour caler les deux boîtiers partiels (13, 14) dans la direction de l'axe de pivotement 20), dans lequel la force exercée avec le dispositif de serrage (30) sur les deux boîtiers partiels (13, 14) est réglable par un élément de serrage, **caractérisé en ce que** l'élément de serrage se déplace lors du serrage dans la direction d'un axe de serrage (31), dans lequel l'axe de serrage (31) définit avec l'axe de pivotement (20) un angle (α) qui est de plus de 10°.

2. Appareil de travail selon la revendication 1,
**caractérisé en ce que** l'angle (α) est de plus de 45°.

3. Appareil de travail selon la revendication 1 ou 2,
**caractérisé en ce que** le dispositif de serrage (30) comprend une liaison filetée (33) et **en ce que** l'axe de serrage (31) est l'axe central de la liaison filetée (33).

4. Appareil de travail selon la revendication 3,
**caractérisé en ce que** la liaison filetée (33) agit entre l'élément de serrage et le boîtier de transmission (6).

5. Appareil de travail selon l'une des revendications 1 à 4,
**caractérisé en ce que** l'axe pivotant (20) coupe un composant de l'unité de transmission (26).

6. Appareil de travail selon l'une des revendications 1 à 5,
**caractérisé en ce que** l'articulation pivotante (27) comporte un boulon de serrage (36) sur lequel l'élément de serrage agit.

7. Appareil de travail selon la revendication 6,
**caractérisé en ce que** le boulon de serrage (36) comporte une section de serrage (46) avec laquelle l'élément de serrage coopère pour régler la force de serrage, dans lequel la section de serrage (46) du boulon de serrage (36) définit avec l'axe de pivotement (20) un angle (β) de plus de 20°.

8. Appareil de travail selon la revendication 7,
**caractérisé en ce que** le boulon de serrage (36) comporte un creux conique (37) sur lequel est formée la section de serrage (46).

9. Appareil de travail selon l'une des revendications 6 à 8,
**caractérisé en ce que** le boulon de serrage (36) traverse l'un des boîtiers partiels (13) et **en ce que** le boulon de serrage (36) comporte une première extrémité (38) qui se trouve à l'intérieur de l'autre boîtier partiel (14).

10. Appareil de travail selon la revendication 9,
**caractérisé en ce que** la section de serrage est disposée près de l'extrémité libre (38) du boulon de serrage (36).

11. Appareil de travail selon l'une des revendications 6 à 10,
**caractérisé en ce que** le dispositif de serrage (30) comporte au moins un ressort (40) qui agit entre le boulon de serrage (36) et un boîtier partiel (13).

12. Appareil de travail selon la revendication 11,
**caractérisé en ce qu'**il est prévu entre le au moins un ressort (40) et une surface d'application (44) du boîtier partiel (13) une rondelle (41) et **en ce que** la rondelle (41) est bloquée en rotation par rapport au boîtier partiel (13), en particulier par complémentarité de forme.

13. Appareil de travail selon l'une des revendications 1 à 12,
**caractérisé en ce que** l'appareil de travail a une tige (5) qui relie un boîtier de moteur (2) au boîtier de transmission (6), dans lequel le premier boîtier partiel (13) est relié de manière fixe à la tige (5).

14. Appareil de travail selon l'une des revendications 1 à 13,
**caractérisé en ce que** l'appareil de travail est un taille-haie (1) et **en ce qu'**au deuxième boîtier partiel (14) est fixé un dispositif à lame (8) qui comprend au moins une barre à lame (10) entraînée suivant un mouvement de va-et-vient.
